# EUROPÄISCHE PATENTANMELDUNG

(11) **EP 2 617 630 A2**
(43) Veröffentlichungstag der Anmeldung: **24.07.2013**
(21) Anmeldenummer: 13151339.2
(22) Anmeldetag: 15.01.2013
(51) Int. Cl.: B62D 33/04

(54) **Aufbau für Kraftfahrzeuge sowie Wechselträgersystem**

(30) Priorität: 18.01.2012 DE 102012000761; 24.05.2012 DE 102012208752
(71) Anmelder: BwFuhrparkService GmbH, 53842 Troisdorf (DE)
(72) Erfinder: Sonntag, Werner, 57368 Lennestadt (DE)
(74) Vertreter: von Kreisler Selting Werner

(57) **Zusammenfassung**

Die vorliegende Erfindung betrifft einen Aufbau (1) für Kraftfahrzeuge bestehend aus einer Bodengruppe (3) und einer Aufbaugruppe (5), wobei die Bodengruppe (3) und die Aufbaugruppe (5) eine Quaderform bilden und wobei die Bodengruppe (3) mindestens zwei parallel zueinander angeordnete Bodenschienenprofile (7) mit jeweils einer Bodenschiene (9) aufweist. Die Aufbaugruppe (5) weist acht Hauptprofile (13) mit jeweils mindestens zwei Schienen (14) und mindestens drei Hilfsprofile (17) mit jeweils mindestens einer Hilfsschiene (18). Die Hauptprofile (13) sind entlang Kanten des Quaders angeordnet und zumindest ein Teil der Bodengruppe (3) bildet eine Seitenfläche des Quaders. Jede Schiene (14) eines Hauptprofils (13) liegt jeweils einer Schiene (14) eines anderen Hauptprofils (13) oder einer Bodenschiene (9) gegenüber. Ferner ist jeweils ein Hilfsprofil (17) zwischen zwei Hauptprofilen (13), einem Hauptprofil (13) und einem Bodenschienenprofil (7), zwei anderen Hilfsprofilen (17), einem Hauptprofil (13) und einem anderen Hilfsprofil (17) oder einem Bodenschienenprofil (7) und einem anderen Hilfsprofil (17) befestigbar.

## Beschreibung

Die vorliegende Erfindung betrifft einen Aufbau für Kraftfahrzeuge nach dem Oberbegriff des Anspruchs 1 sowie ein Wechselträgersystem für Kraftfahrzeuge.

Bei Kraftfahrzeugen, wie beispielsweise Lastkraftwagen sowie Kleintransportern, werden häufig sogenannte Kofferaufbauten verwendet. Die Kofferaufbauten können einen für unterschiedliche Einsatzzwecke vorgesehenen Innenausbau besitzen. Vorbekannte Kofferaufbauten werden beispielsweise bei Monteurfahrzeugen oder bei Krankenwagen verwendet, so dass die Kofferaufbauten einen Werkstattinnenausbau oder eine an Krankentransporte angepasste Innenausstattung aufweisen. Auch werden Kofferaufbauten im militärischen Bereich verwendet, wobei der Innenausbau beispielsweise mit einer Funkausrüstung versehen ist und die Kofferaufbauten als Funkerkabine verwendet werden.

Bei allen vorbekannten Kofferaufbauten wird die Innenausstattung individuell für den Kunden angepasst. Die Innenausstattung wird dabei fest mit dem Koffer verbunden. Aufgrund der festen Verbindung mit dem Aufbau sowie den individuellen Kundenwünschen ist ein Verkauf des Fahrzeuges mit dem Kofferaufbau auf dem Gebrauchtmarkt häufig nicht oder nur schwierig möglich. Darüber hinaus ist eine Anpassung eines vorgefertigten Aufbaus an neue Bedürfnisse oder ein Umbau nicht oder nur mit sehr großem Aufwand möglich.

Es ist ferner bekannt, dass Aufbauten von Fahrzeugen über ein Wechselträgersystem ausgetauscht werden.

Es ist die Aufgabe der vorliegenden Erfindung, einen Aufbau für Kraftfahrzeuge zu schaffen, bei dem eine Anpassung oder ein Umbau auf eine einfache Art und Weise ermöglicht wird. Der Aufbau soll ferner auf flexible Weise auch mit Kleintransportern verwendbar sein.

Eine weitere Aufgabe der vorliegenden Erfindung ist ein flexibel einsetzbares Wechselträgersystem zu schaffen.

Zur Lösung der Aufgabe dienen die Merkmale des Anspruchs 1 und des Anspruchs 13.

Ein erster Aspekt der Erfindung ist in Patentanspruch 1 definiert. Die Erfindung sieht demnach einen Aufbau für Kraftfahrzeuge bestehend aus einer Bodengruppe und einer Aufbaugruppe vor, wobei die Bodengruppe und die Aufbaugruppe eine Quaderform bilden und wobei die Bodengruppe mindestens zwei parallel zueinander angeordnete Bodenschienenprofile mit jeweils einer Bodenschiene aufweist. Die Erfindung ist dadurch gekennzeichnet, dass die Aufbaugruppe acht Hauptprofile mit jeweils mindestens zwei Schienen und mindestens drei Hilfsprofile mit jeweils mindestens einer Hilfsschiene aufweist. Die Hauptprofile sind entlang Kanten des Quaders angeordnet, wobei die Bodengruppe eine Seitenfläche des Quaders bildet. Jede Schiene eines Hauptprofils liegt jeweils einer Schiene eines anderen Hauptprofils oder einer Bodenschiene gegenüber. Jeweils ein Hilfsprofil ist zwischen zwei der vorgenannten Profile befestigbar. Mit anderen Worten: Ein Hilfsprofil ist zwischen zwei Hauptprofilen, einem Hauptprofil und einem Bodenschienenprofil, zwei anderen Hilfsprofilen, einem Hauptprofil und einem anderen Hilfsprofil und/oder einem Bodenschienenprofil und einem anderen Hilfsprofil befestigbar.

Durch die erfindungsgemäße Anordnung von Hauptprofilen sowie den Bodenschienenprofilen wird ermöglicht, dass die Hilfsprofile in vorteilhafter Weise in den Schienen bzw. Bodenschienen befestigbar sind. Dazu greifen die Hilfsprofile beispielsweise mit an ihren Enden angeordneten Befestigungselementen in die Schienen bzw. Bodenschienen ein. Durch das Vorsehen von drei Hilfsprofilen, die an den Bodenschienenprofilen, den Hauptprofilen oder einem anderen Hilfsprofil befestigbar sind, kann jeder in dem Quader befindliche Punkt über die Hilfsprofile erreicht werden und kann als Befestigungspunkt für eine Innenausstattung des Aufbaus genutzt werden. Der Befestigungspunkt kann dabei beispielsweise durch ein freies Ende eines Hilfsprofils oder durch einen beliebigen Punkt der Hilfsschiene eines Hilfsprofils gebildet sein. Durch das über die Bodenschienenprofile, die Hauptprofile und die Hilfsprofile gebildete Schienensystem lässt sich die Aufbaugruppe auf einfache Art und Weise an unterschiedliche Bedürfnisse des Innenausbaus anpassen. Die Hilfsprofile können auf einfache Art und Weise in den entsprechenden Schienen verschoben werden, so dass auch eine nachträgliche Anpassung an den Innenausbau oder eine Veränderung des Innenausbaus möglich ist. Durch die Hauptprofile wird darüber hinaus ein sehr stabiler Rahmen gebildet, an dem in vorteilhafter Weise die Innenausstattung befestigt werden kann. Dadurch, dass jeder Punkt innerhalb des Quaders als Befestigungspunkt dienen kann, wird dem Innenausbau des erfindungsgemäßen Aufbaus nahezu zu keine Grenzen gesetzt.

Der aus den Hauptprofilen gebildete Teil der Aufbaugruppe kann sich nur über einen Teil der Bodengruppe erstrecken, so dass der andere Teil der Bodengruppe anderweitig genutzt werden kann oder auch mit der gesamten Bodengruppe zusammenwirkt.

In einem Ausführungsbeispiel der Erfindung ist vorgesehen, dass die Hilfsprofile und/oder die Hauptprofile als Strebenprofile ausgebildet sind.

Die Bodenschienen, die Schienen und/oder die Hilfsschienen können durch eine Nut gebildet sein. Die Nut ist dabei in dem entsprechenden Hauptprofil, Hilfsprofil bzw. Bodenschienenprofil angeordnet.

Der Aufbau kann als Kofferaufbau gebildet sein, in dem Wände und eine Decke vorgesehen sind, die an den Hauptprofilen befestigt sind.

Die Bodenschienenprofile können beispielsweise als C-Schiene ausgebildet sein. Eine derartige Schiene hat sich als besonders vorteilhaft für die Aufnahme von Befestigungselementen des Hilfsprofils oder eines Hauptprofils herausgestellt.

Die Erfindung kann insbesondere vorsehen, dass einige der Hauptprofile mit der Bodengruppe verbunden sind, indem diese mit den Bodenschienenprofilen verbunden sind. Dabei können die Hauptprofile beispielsweise mit Befestigungselementen in die Bodenschiene eingreifen. Für eine derartige Anordnung hat sich die Ausgestaltung der Bodenschienenprofile als C-Schiene als besonders vorteilhaft herausgestellt, da in eine C-Schiene die Hauptprofile und/oder die Hilfsprofile in besonders vorteilhafter Weise mit Befestigungselementen eingreifen kann und darüber hinaus auf einfache Art und Weise und sehr stabil fixierbar ist.

In einem besonders bevorzugten Ausführungsbeispiel der Erfindung besitzt die Bodengruppe einen Rahmen aus abgekanteten Rahmenprofilen. Die abgekanteten Rahmenprofile können beispielsweise Hohlprofile sein.

Zwischen den Rahmen kann eine Gitteranordnung aus abgekanteten Längsprofilen und abgekanteten Querprofilen angeordnet sein, die mit den abgekanteten Rahmenprofilen verbunden sind. Auf diese Weise wird eine sehr stabile Bodengruppe gebildet, wobei durch die abgekanteten Rahmen, Längsund Querprofile eine hohe Stabilität bei geringem Gewicht ermöglicht wird. Insbesondere bei Verwendung des erfindungsgemäßen Aufbaus auf Kleintransportern, die beispielsweise eine Zuladungsbeschränkung 2,8 t oder 3,5 t besitzen, ist ein derartiger Leichtbau von besonderem Vorteil. Die Längsprofile erstrecken sich dabei in Längsrichtung des Fahrzeuges.

Dabei kann vorgesehen sein, dass die Bodenschienenprofile jeweils auf einem der abgekanteten Längsprofilen oder einem der sich in Längsrichtung des Fahrzeugs erstreckenden abgekanteten Rahmenprofilen angeordnet sind. Dadurch wird eine sehr hohe Stabilität des erfindungsgemäßen Aufbaus erreicht, da die von dem Innenausbau über die Haupt- oder Hilfsprofile auf die Bodenprofile übertragenden Kräfte von den Längsprofilen oder Rahmenprofilen aufgenommen werden.

In einem Ausführungsbeispiel der Erfindung weist die Bodengruppe sechs Bodenschienenprofile auf. Es hat sich herausgestellt, dass das Vorsehen von sechs Bodenschienenprofilen ausreichend für einen sehr flexiblen Einsatz des erfindungsgemäßen Aufbaus ist und gleichzeitig jede der Bodenschienenprofile auf einem Längsprofil bzw. Rahmenprofil angeordnet sein kann, ohne das Gewicht der Bodengruppe in zu großem Maße zu erhöhen.

Die Bodengruppe kann mehrere Bodenplatten aufweisen, die zwischen den Bodenschienenprofilen angeordnet sind. Die Bodenschienenprofile sind somit in dem durch die Bodenplatten gebildeten Fläche eingelassen. Dadurch können auch Gegenstände auf dem Boden der Bodengruppe abgestellt oder angeordnet werden, ohne dass die Bodenschienenprofile dabei störend sind.

In einem besonders bevorzugten Ausführungsbeispiel der Erfindung ist vorgesehen, dass der Rahmen seitliche Öffnungen in den Rahmenprofilen aufweist, wobei jeweils eines der abgekanteten Querprofile an einer der Öffnungen anschließt. Dabei können die Querprofile als U-Profile oder geschlossene Hohlprofile ausgebildet sein. Die seitlichen Öffnungen in dem Rahmen bilden zusammen mit den Querprofilen Staplerschuhe. Dabei kann auch vorgesehen sein, dass eines der Querprofile zwei an gegenüberliegenden Rahmenprofilen angeordnete Öffnungen miteinander verbindet.

Die Staplerschuhe sind dabei derart ausgebildet, dass diese auch zur Aufnahme von Stützen dienen können. Bei der Ausgestaltung des erfindungsgemäßen Aufbaus, beispielsweise als Wechselträgersystem oder bei dem Zusammenbau des Fahrzeuges, kann über die Staplerschuhe der erfindungsgemäße Aufbau in vorteilhafter Weise mittels eines Staplers transportiert werden. Durch die Möglichkeit, in die Staplerschuhe Stützen einzusetzen, kann der erfindungsgemäße Aufbau auch aufgeständert werden, so dass das Fahrzeug, das den erfindungsgemäßen Aufbau tragen soll, unter den erfindungsgemäßen Aufbau verfahren werden kann.

Die Bodengruppe kann auf der der Aufbaugruppe gegenüberliegenden Seite Aufnahmen aufweisen, die an ein Befestigungssystem eines Wechselträgersystems angepasst sind. Dadurch kann der erfindungsgemäße Aufbau in vorteilhafter Weise mit einem Wechselträgersystem verwendet werden.

Ein weiterer Aspekt der Erfindung ist durch den Anspruch 14 definiert. Demnach sieht die Erfindung ein Wechselträgersystem mit einem Zwischenrahmen und dem zuvor beschriebenen erfindungsgemäßen Aufbau vor. Das Wechselträgersystem kann vorsehen, dass der Aufbau lösbar an dem Zwischenrahmen angeordnet ist. Selbstverständlich ist es auch möglich, dass der Aufbau fest mit dem Zwischenrahmen verbunden ist und dass der Zwischenrahmen lösbar mit einem Kraftfahrzeug verbunden ist.

Bei einem Ausführungsbeispiel des erfindungsgemäßen Wechselträgersystems ist vorgesehen, dass der Zwischenrahmen Radläufe umfasst und der Aufbau im befestigten Zustand oberhalb der Radläufe angeordnet ist. Dies hat insbesondere den Vorteil, wenn der Aufbau lösbar an dem Zwischenrahmen angeordnet ist. Somit können an unterschiedliche Fahrzeuge angepasste Zwischenrahmen vorgesehen sein, die fest mit dem jeweiligen Fahrzeug verbunden sind. Die Zwischenrahmen können dann ein universelles Befestigungssystem für den Aufbau vorsehen, so dass der Aufbau auf unterschiedliche Zwischenrahmen aufsetzbar ist. Durch das Vorsehen der Radläufe in dem Zwischenrahmen ist es somit nicht notwendig, dass der Aufbau an die unterschiedlichen Radpositionen bei unterschiedlichen Fahrzeugen angepasst ist.

Der Zwischenrahmen kann aus abgekanteten Trägerprofilen bestehen. Dadurch ist eine hohe Stabilität bei geringem Gewicht verwirklichbar.

Die Erfindung wird nachfolgend unter Bezugnahme auf die Zeichnungen näher erläutert. Es zeigen:
- Fig. 1: eine schematische perspektivische Ansicht eines erfindungsgemäßen Aufbaus mit Bodengruppe,
- Fig. 2: eine schematische perspektivische Ansicht eines Teils der Bodengruppe und
- Fig. 3: eine schematische perspektivische Ansicht eines Zwischenrahmens.

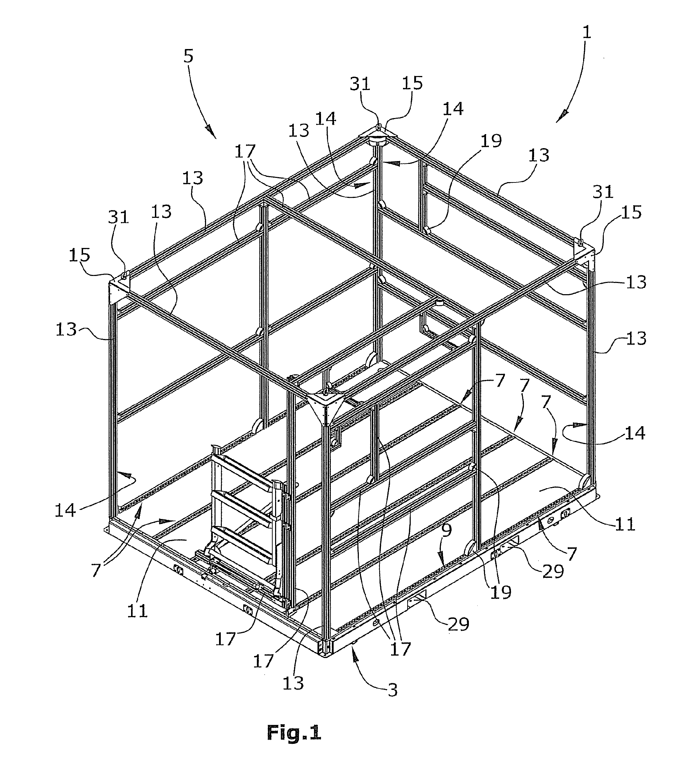

Fig. 1 zeigt einen erfindungsgemäßen Aufbau 1 für Kraftfahrzeuge schematisch in einer perspektivischen Ansicht.

Der Aufbau 1 besteht aus einer Bodengruppe 3 und einer Aufbaugruppe 5.

Die Bodengruppe 3 weist mehrere parallel angeordnete Bodenschienenprofile 7 auf, die jeweils eine Bodenschiene 9 besitzen. In dem in Fig. 1 dargestellten Ausführungsbeispiel weist die Bodengruppe sechs Bodenschienenprofile 7 auf.

Zwischen den Bodenschienenprofilen 7 sind Bodenplatten 11 angeordnet, die eine Bodenfläche bilden. Die Bodenplatten 11 schließen direkt an die Bodenschienenprofile 7 an, so dass die Bodenschienenprofile 7 und die Bodenschienen 9 in der Bodenfläche versenkt sind. Mit anderen Worten: Die Bodenschienenprofile 7 stehen von der Bodenfläche nicht ab, so dass in vorteilhafter Weise Gegenstände auf der Bodenfläche abgestellt oder angeordnet werden können.

Die Aufbaugruppe 5 weist acht Hauptprofile 13 auf, die zusammen mit der Bodengruppe 3 eine Quaderform bilden. Dazu sind die Hauptprofile 13 entlang des Kanten des Quaders angeordnet und die Bodengruppe bildet eine Seitenfläche des Quaders. Vier der Hauptprofilen 13 sind dabei senkrecht zu der Bodengruppe 3 angeordnet und vier Hauptprofile 13 verlaufen parallel zu der Bodengruppe 3.

Die Aufbaugruppe 5 ist mit der Bodengruppe 3 verbunden, indem die senkrecht zu der Bodengruppe 3 verlaufenden Hauptprofile 13 an den beiden äußeren Bodenschienenprofilen 7 befestigt sind. Dazu greifen diese Hauptprofile 13 mit nicht dargestellten Befestigungsmitteln in die Bodenschienen 9 der Bodenschienenprofile 7 ein.

An dem von der Bodengruppe 3 abgewandten Ende sind die senkrecht zu der Bodengruppe 3 verlaufenden Hauptprofile 13 mit den parallel zu der Bodengruppe 3 verlaufenden Hauptprofilen 13 verbunden. Dazu werden spezielle Eckverbinder 15 verwendet.

Jedes Hauptprofil 13 weist mindestens zwei Schienen 14 auf, wobei jede Schiene 14 eines Hauptprofils 13 einer Schiene 14 eines anderen Hauptprofils 13 oder einer Bodenschiene 9 gegenüberliegt.

Die Aufbaugruppe 5 weist ferner mehrere Hilfsprofile 17 auf, die an den Bodenschienenprofilen 7, den Hauptprofilen 13 und/oder untereinander lösbar befestigt sind. Dazu weist jedes der Hilfsprofile 17 mindestens eine Hilfsschiene 18 auf. Die Hilfsprofile 17 greifen zur Befestigung mit an ihren Enden angeordneten Befestigungselementen, die in den Figuren nicht dargestellt sind, in die Schienen 14 der Hauptprofile 13, die Bodenschienen 9 der Bodenschienenprofile 7 oder den Hilfsschienen 18 anderer Hilfsprofile 17 ein. Über die Hilfsprofile 17 können somit an einer beliebigen Stelle in dem von der Aufbaugruppe 5 und der Bodengruppe 3 gebildeten Raum Befestigungspunkte für einen Innenausbau geschaffen werden. Dazu müssen die drei Hilfsprofile 17 lediglich entlang den Schienen 14, Bodenschienen 9 bzw. Hilfsschienen 18 bis zu der gewünschten Stelle verschoben und dort fixiert werden. Als Befestigungspunkt kann dabei entweder ein freies Endes eines der Hilfsprofile 17 oder ein beliebiger Punkt innerhalb der Hilfsschiene 18 dienen.

Zur Erhöhung der Stabilität einer Verbindung zwischen einem Hilfsprofil 17 und einem Hauptprofil 13, einem Bodenprofil 7 oder einem anderen Hilfsprofil 17 sind Winkelklötze 19 vorgesehen.

Die Hauptprofile 13 und die Hilfsprofile 17 können beispielsweise als Strebenprofil ausgebildet sein. Dabei können die Schienen 14 und die Hilfsschienen 18 beispielsweise durch eine Nut gebildet sein. Vorzugsweise weisen die Hauptprofile 13 und die Hilfsprofile 17 jeweils vier Schienen 14 bzw. Hilfsschienen 18 auf, die im Querschnitt betrachtet um 90° zueinander versetzt sind. Dadurch ist eine besonders hohe Flexibilität des erfindungsgemäßen Aufbaus 1 gewährleistet.

Der erfindungsgemäße Aufbau 1 kann ferner nicht dargestellte Wände aufweisen, die an den Hauptprofilen 13 angeordnet werden. Dadurch kann der erfindungsgemäße Aufbau 1 als Kofferaufbau ausgebildet werden.

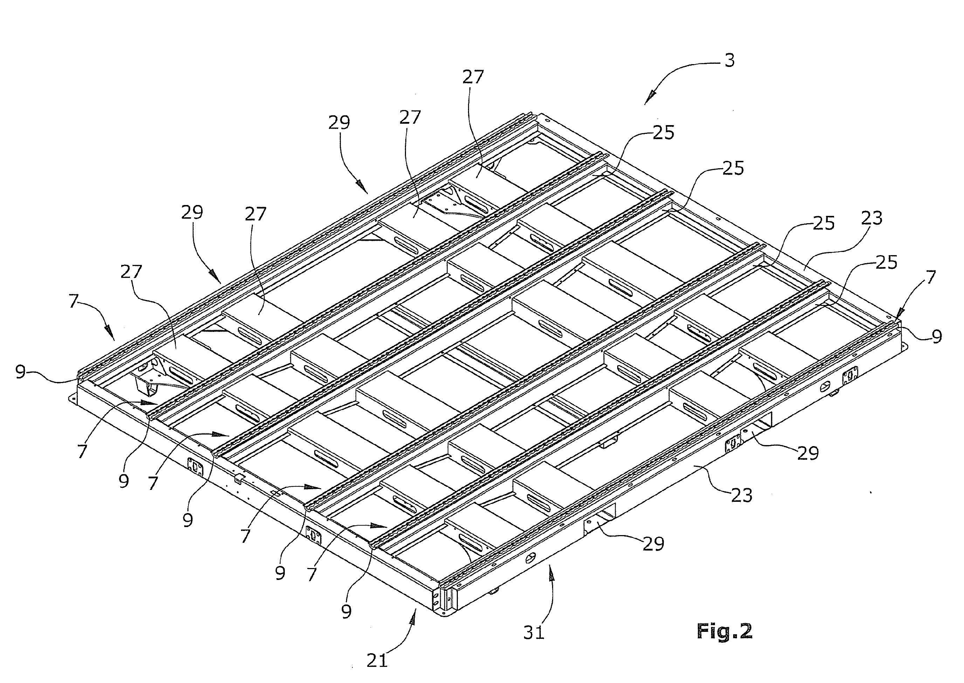

In Fig. 2 ist ein Teil der Bodengruppe 3 schematisch in einer perspektivischen Darstellung gezeigt. Die Bodengruppe 3 ist dabei ohne die Bodenplatten 11 gezeigt.

Wie aus Fig. 2 ersichtlich ist, weist die Bodengruppe 3 einen Rahmen 21 auf, der aus abgekanteten Rahmenprofilen 23 gebildet ist. Zwischen dem Rahmen 21 ist eine Gitteranordnung aus abgekanteten Längsprofilen 25 und abgekanteten Querprofilen 27 angeordnet. Die Rahmenprofile 23, Längsprofile 25 und Querprofile 27 sind beispielsweise als Hohlprofile oder U-Profile ausgebildet.

Durch die spezielle Ausgestaltung dieser Profile wird somit ein besonderer Leichtbau der Bodengruppe 3 ermöglicht, der dennoch eine ausreichende Stabilität besitzt. Dadurch kann der erfindungsgemäße Aufbau auch in vorteilhafter Weise auf Kleintransportern, die nur eine relativ geringe Zuladung besitzen, verwendet werden.

Die Längsprofile 25 sind in Längsrichtung eines nicht dargestellten Kraftfahrzeuges angeordnet.

Die Bodenschienenprofile 7 sind in dem in den Figuren dargestellten Ausführungsbeispiel als C-Schiene ausgebildet. Eine derartige Schiene hat sich als besonders vorteilhaft für die erfindungsgemäße Konstruktion eines Aufbaus herausgestellt.

Die Bodenschienenprofile 7 sind jeweils auf einen der Längsprofile 25 bzw. auf den parallel zu den Längsprofilen 25 angeordneten Rahmenprofilen 23 befestigt. Dadurch können die auf die Bodenschienenprofile 7 ausgeübten Kräfte in vorteilhafter Weise von der Bodengruppe 3 aufgenommen werden.

Die parallel zu den Längsprofilen 25 angeordneten Rahmenprofile 23 weisen seitliche Öffnungen auf, an die sich jeweils eines der Querprofile 27 anschließt. Dadurch werden von den Querprofilen 27 und den Öffnungen 29 Staplerschuhe gebildet, über die der erfindungsgemäße Aufbau 1 in vorteilhafter Weise mittels eines Staplers bewegt werden kann. Die Staplerschuhe sind dabei so ausgestaltet, dass Stützen in die Öffnungen 29 eingefahren werden können, so dass der erfindungsgemäße Aufbau 1 auch aufgeständert werden kann.

Der erfindungsgemäße Aufbau 1 kann auch, wie in Fig. 1 dargestellt ist, Transportösen 31 aufweisen, über die ein Transport des Aufbaus mittels eines Krans ermöglicht wird. Die Transportösen sind beispielsweise an den Eckverbindern 15 angeordnet.

Die Längsträger 25 verdicken sich zum mittleren Bereich der Bodengruppe 3 hin, wodurch insbesondere in dem Bereich, in dem die die Staplerschuhe bildenden Querprofile 27 die Längsprofile 25 kreuzen, eine höhere Stabilität der Bodengruppe 3 gewährleistet wird.

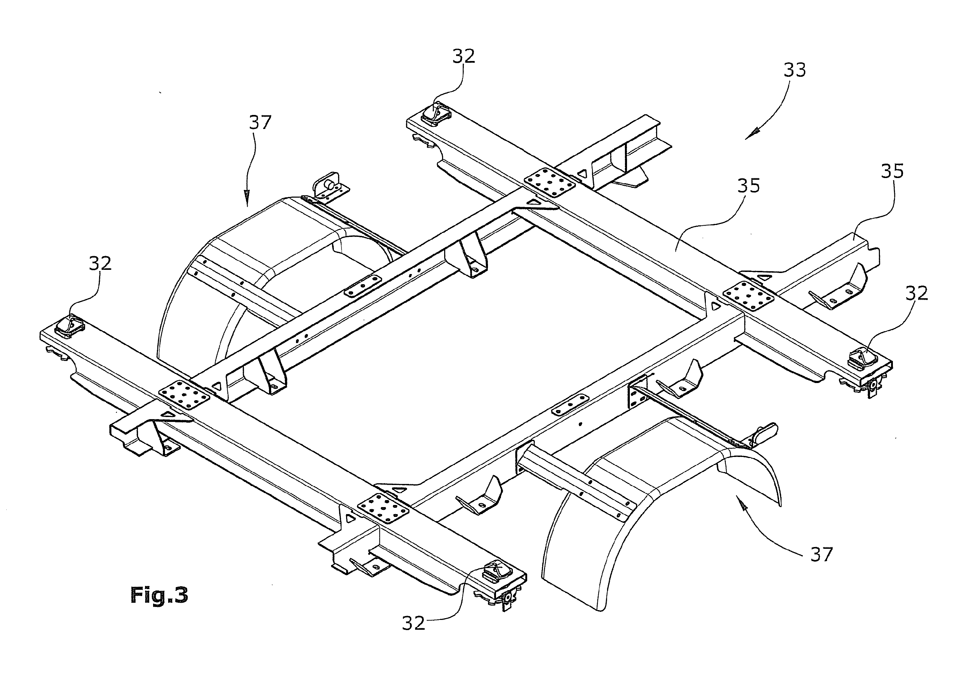

Der erfindungsgemäße Aufbau 1 kann in besonders vorteilhafter Weise mit einem Wechselträgersystem verwendet werden. Dazu weist die Bodengruppe 3, auf der der Aufbaugruppe 5 gegenüberliegenden Seite Aufnahmen 31 auf, die an einem Befestigungssystem eines Wechselträgersystems angepasst sind. Das Wechselträgersystem kann beispielsweise einen in Fig. 3 dargestellten Zwischenrahmen 33 aufweisen. Der Aufbau 1 ist lösbar mit dem Zwischenrahmen 33 verbindbar.

Der Zwischenrahmen 33 besteht aus mehreren abgekanteten Trägern 35, wodurch eine besonders leichte Bauweise ermöglicht wird. Der erfindungsgemäße Zwischenträger 33 ist an ein jeweiliges Fahrzeug angepasst und fest mit dem Fahrzeugrahmen verbunden. Er umfasst Radläufe 37, wobei die durch den Zwischenrahmen 33 gebildete Ebene, auf die der erfindungsgemäße Aufbau 1 aufgesetzt wird, oberhalb der Radläufe 37 verläuft. Das an dem Zwischenrahmen 33 angeordnete Befestigungssystem 32 ist universell ausgestaltet, so dass der erfindungsgemäße Aufbau 1 auf unterschiedliche Zwischenrahmen 33 aufgesetzt werden kann. Mit anderen Worten: Erfindungsgemäß ist vorgesehen, dass verschiedene Zwischenrahmen 33 an den unterschiedlichen Fahrzeugtypen angepasst sind, jedoch ein gleich angeordnetes Befestigungssystem 32 aufweisen. Der Zwischenrahmen 33 dient somit als Adapter zwischen einem Fahrzeugtyp und dem erfindungsgemäßen Aufbau. Der erfindungsgemäße Aufbau ist somit besonders flexibel einsetzbar, da er auf unterschiedliche Fahrzeugtypen auf einfache Art und Weise aufgesetzt werden kann.

Durch die Gestaltung der Aufbaugruppe 5 ist darüber hinaus eine flexible Gestaltung des Innenraums des Aufbaus 1 sowie eine nachträgliche Abänderung und Anpassung in besonders vorteilhafter Weise möglich.

## Patentansprüche

1. Aufbau (1) für Kraftfahrzeuge bestehend aus einer Bodengruppe (3) und einer Aufbaugruppe (5), wobei die Bodengruppe (3) und die Aufbaugruppe (5) eine Quaderform bilden und wobei die Bodengruppe (3) mindestens zwei parallel zueinander angeordnete Bodenschienenprofile (7) mit jeweils einer Bodenschiene (9) aufweist,
**dadurch gekennzeichnet,dass**
- die Aufbaugruppe (5) acht Hauptprofile (13) mit jeweils mindestens zwei Schienen (14) und mindestens drei Hilfsprofile (17) mit jeweils mindestens einer Hilfsschiene (18) aufweist,
- wobei die Hauptprofile (13) entlang Kanten des Quaders angeordnet ist und zumindest ein Teil der Bodengruppe (3) eine Seitenfläche des Quaders bildet,
- wobei jede Schiene (14) eines Hauptprofils (13) jeweils einer Schiene (14) eines anderen Hauptprofils (13) oder einer Bodenschiene (9) gegenüberliegt und
- wobei jeweils ein Hilfsprofil (17) zwischen zwei Hauptprofilen (13), einem Hauptprofil (13) und einem Bodenschienenprofil (7), zwei anderen Hilfsprofilen (17), einem Hauptprofil (13) und einem anderen Hilfsprofil (17) oder einem Bodenschienenprofil (7) und einem anderen Hilfsprofil (17) befestigbar ist.

2. Aufbau nach Anspruch 1, **dadurch gekennzeichnet, dass** die Hauptprofile (13) und/oder die Hilfsprofile (17) als Strebenprofile ausgebildet sind.

3. Aufbau nach Anspruch 1 oder 2, **dadurch gekennzeichnet, dass** die Schienen (14) und/oder die Hilfsschienen (18) durch Nuten gebildet sind.

4. Aufbau nach einem der Ansprüche 1 bis 3, **dadurch gekennzeichnet, dass** Wände an den Hauptprofilen angeordnet sind.

5. Aufbau nach einem der Ansprüche 1 bis 4, **dadurch gekennzeichnet, dass** die Bodenschienenprofile (7) als C-Schienen ausgebildet sind.

6. Aufbau nach einem der Ansprüche 1 bis 5, **dadurch gekennzeichnet, dass** die Bodengruppe (3) einen Rahmen (21) aus abgekanteten Rahmenprofilen (23) aufweist.

7. Aufbau nach Anspruch 6, **dadurch gekennzeichnet, dass** zwischen dem Rahmen (21) eine Gitteranordnung aus abgekanteten Längsprofilen (25) und abgekanteten Querprofilen (27) angeordnet ist.

8. Aufbau nach Anspruch 6 oder 7, **dadurch gekennzeichnet, dass** jedes Bodenschienenprofil (7) auf einem der abgekanteten Längsprofile (25) oder auf einem der abgekanteten Rahmenprofile (23) angeordnet ist.

9. Aufbau nach einem der Ansprüche 1 bis 8, **dadurch gekennzeichnet, dass** die Bodengruppe aus mindestens sechs Bodenschienenprofilen (7) besteht.

10. Aufbau nach einem der Ansprüche 1 bis 9, **dadurch gekennzeichnet, dass** die Bodengruppe (3) mehrere Bodenplatten (11) aufweist, die zwischen den Bodenschienenprofilen (7) angeordnet sind.

11. Aufbau nach einem der Ansprüche 7 bis 10, **dadurch gekennzeichnet, dass** der Rahmen (21) seitliche Öffnungen (29) aufweist, wobei an jede Öffnung eines der Querprofile (27) anschließt und wobei die Öffnungen (29) zusammen mit den Querprofilen (27) Staplerschuhe bilden.

12. Aufbau nach einem der Ansprüche 1 bis 11, **dadurch gekennzeichnet, dass** die Bodengruppe (3) auf der der Aufbaugruppe (5) gegenüberliegenden Seite an ein Befestigungssystem eines Wechselträgersystems angepasste Aufnahmen aufweist.

13. Wechselträgersystem mit einem Zwischenrahmen (33) und einem Aufbau (1) nach einem der Ansprüche 1 bis 12.

14. Wechselträgersystem nach Anspruch 13, **dadurch gekennzeichnet, dass** der Aufbau (1) lösbar an dem Zwischenrahmen (33) angeordnet ist.

15. Wechselträgersystem nach Anspruch 13 oder 14, **dadurch gekennzeichnet, dass** der Zwischenrahmen (33) Radläufe (37) umfasst, wobei der Aufbau (1) im befestigten Zustand oberhalb der Radläufe (37) angeordnet ist und/oder dass der Zwischenrahmen (33) aus abgekanteten Trägerprofilen (35) besteht.
